# EUROPEAN PATENT APPLICATION

(11) **EP 4 609 721 A1**
(43) Date of publication of application: **03.09.2025**
(21) Application number: 23882749.7
(22) Date of filing: 27.10.2023
(51) Int. Cl.: A23D 9/02, A23D 9/00, A23D 9/007, A23L 27/00

(54) **OIL/FAT COMPOSITION AND METHOD FOR PRODUCING SAME**

(30) Priority: 27.10.2022 JP 2022172524
(71) Applicant: THE NISSHIN OILLIO GROUP, LTD., Tokyo 104-8285 (JP)
(72) Inventor: SEKIGUCHI Yoshinori, Yokohama-shi, Kanagawa 235-8558 (JP); ISAKA Daisuke, Yokohama-shi, Kanagawa 235-8558 (JP); AOYAGI Kanji, Yokohama-shi, Kanagawa 235-8558 (JP)
(74) Representative: Hasegawa, Kan
(86) International application number: PCT/JP2023/038859
(87) International publication number: WO 2024/090547

(57) **Abstract**

The purpose of the present invention is to provide an oil/fat composition in which oxidative rancidity is suppressed and which exhibits a sweet aroma and/or milky aroma. Specifically, provided is an oil/fat composition containing: 5 mass ppm or more of lactone having 6-14 carbons; and an oil/fat. The oil/fat has, in the constituent fatty acids thereof, linear saturated fatty acids having 6-14 carbons at 4-100% by mass. The lactone having 6-14 carbons is γ-lactone and/or δ-lactone. The content of linear alkanes having 9 carbons in the oil/fat composition is 130 mass ppm or less.

## Description

### Technical Field

The present invention relates to an oil and/or fat composition and a method for producing the same.

### Background Art

Oils and/or fats (lipids) are not only one of the three major nutrients, but also important ingredients that impart deliciousness to food. Oils and/or fats make the taste of food mild and give it richness. Examples of foods that become delicious due to oils and/or fats include tempura, fried foods, ramen noodles, pies, chocolate, cream, and cheese. There are various oils and/or fats, ranging from nearly tasteless and odorless oils and/or fats such as salad oil to oils and/or fats whose unique flavors are prized, such as roasted sesame oil and butter. These oils and/or fats are used according to their applications.

Further, as a method for enhancing the flavor of oils and/or fats, particularly the base rich taste, a method is known in which a specific amount of specific coconut oil is included in the oil and/or fat (Patent Literature 1). Patent Literature 1 specifically discloses an oil and/or fat containing 0.001 to 15% by mass of virgin coconut oil. A sweetness enhancer is also known whose active ingredient is oxidized oil and/or fat obtained by oxidizing oil and/or fat containing coconut oil (Patent Literature 2).

### Citation List

### Patent Literatures

Patent Literature 1: Japanese Unexamined Patent Application Publication No. 2017-213004
Patent Literature 2: Japanese Unexamined Patent Application Publication No. 2022-151720

### Summary of Invention

However, the virgin coconut oil contained in the oil and/or fat composition of Patent Literature 1 contains a large amount of unsaturated fatty acids, which cause rancid odor (oxidative deterioration odor); therefore, the aroma of lactones in the virgin coconut oil cannot be sufficiently perceived due to the rancid odor. In oxidized oils and/or fats such as those in Patent Literature 2, although a large amount of lactones are generated as oxidation progresses, a large amount of rancid odor is also generated, resulting in an unpleasant flavor.

An object of the present invention is to provide an oil and/or fat composition that has a suppressed rancid odor and exhibits a sweet aroma and/or a milky aroma.

As a result of intensive studies to achieve the above object, the present inventors have found that in an oil and/or fat composition containing 5 mass ppm or more of lactone having 6 to 14 carbon atoms (γ-lactone and/or δ-lactone), rancid odor correlates with the amount of alkanes having 9 carbon atoms, thereby completing the present invention.

That is, the present invention provides the following [1] to [10].
[1] An oil and/or fat composition comprising 5 mass ppm or more of lactone having 6 to 14 carbon atoms, wherein
   the oil and/or fat in the oil and/or fat composition has a content of linear saturated fatty acids having 6 to 14 carbon atoms of 4 to 100% by mass in the constituent fatty acids of the oil and/or fat,
   the lactone having 6 to 14 carbon atoms is γ-lactone and/or δ-lactone, and
   the linear alkanes having 7 to 8 carbon atoms and/or linear alkanes having 9 carbon atoms in the oil and/or fat composition are 130 mass ppm or less.
[2] The oil and/or fat composition according to [1], further comprising 5 mass ppm or more of linear alkanes having 17 carbon atoms.
[3] The oil and/or fat composition according to [1] or [2], having a sweet aroma and/or a milky aroma.
[4] The oil and/or fat composition according to any one of [1] to [3], wherein the oil and/or fat has a content of linear unsaturated fatty acids of 0 to 60% by mass in the constituent fatty acids of the oil and/or fat.
[5] The oil and/or fat composition according to any one of [1] to [4], wherein the oil and/or fat is a hydrogenated oil of lauric oils and/or fats.
[6] The oil and/or fat composition according to any one of [1] to [5], containing 50% by mass or more of triglycerides in the oil and/or fat composition.
[7] A food comprising the oil and/or fat composition according to any one of [1] to [6].
[8] A method for producing the oil and/or fat composition according to any one of [1] to [6], comprising
   an oxidative heating step of oxidatively heat-treating an oil and/or fat, in which the content of linear saturated fatty acids having 6 to 14 carbon atoms in the constituent fatty acids in the oil and/or fat is 4 to 100% by mass, to generate 5 mass ppm or more of lactone having 6 to 14 carbon atoms and more than 130 mass ppm of linear alkanes having 7 to 9 carbon atoms in the oil and/or fat; and
   subsequently performing a distillation step, or a mixing step, or a distillation step and a mixing step, or a mixing step and a distillation step as follows:
      Distillation step: a step of distilling under conditions where the linear alkanes having 7 to 8 carbon atoms and/or the linear alkanes having 9 carbon atoms in the oil and/or fat are reduced, but the lactone having 6 to 14 carbon atoms in the oil and/or fat remain at 5 mass ppm or more.
      Mixing step: a step of mixing the oil and/or fat after the oxidative heating step or the oil and/or fat after the distillation step with an oil and/or fat having a smaller amount of linear alkanes having 7 to 8 carbon atoms and/or linear alkanes having 9 carbon atoms.
[9] The method for producing the oil and/or fat composition according to [7], wherein the oil and/or fat to be oxidatively heat-treated has a content of linear unsaturated fatty acids of 0 to 60% by mass in the constituent fatty acids of the oil and/or fat.
[10] The method for producing the oil and/or fat composition according to [8] or [9], wherein the distillation in the distillation step is performed at 200°C or lower, 200 Pa or higher, and within 60 minutes.
[11] The method for producing the oil and/or fat composition according to any one of [8] to [10], wherein the mixing step in the mixing step includes mixing an oil and/or fat that has not undergone an oxidative heating step with the oil and/or fat after the oxidative heating step or the distillation step, which contains 130 mass ppm or more of linear alkanes having 7 to 8 carbon atoms and/or linear alkanes having 9 carbon atoms in the oil and/or fat.

Further, the present invention may also be in the following embodiments.
[1] An oil and/or fat composition comprising 5 mass ppm or more of lactone having 6 to 14 carbon atoms and oil and/or fat, wherein
   an oil and/or fat is such that a content of linear saturated fatty acids having 6 to 14 carbon atoms in constituent fatty acids of the oil and/or fat is 4 to 100% by mass,
   the lactone having 6 to 14 carbon atoms is γ-lactone and/or δ-lactone, and
   linear alkanes having 9 carbon atoms in the oil and/or fat composition are 130 mass ppm or less.
[2] The oil and/or fat composition according to [1], wherein the linear alkanes having 7 to 9 carbon atoms in the oil and/or fat composition are 130 mass ppm or less.
[3] The oil and/or fat composition according to [1] or [2], further comprising 5 mass ppm or more of linear alkanes having 17 carbon atoms.
[4] The oil and/or fat composition according to any one of [1] to [3], having a sweet aroma and/or a milky aroma.
[5] The oil and/or fat composition according to any one of [1] to [4], wherein the oil and/or fat is an oil and/or fat having a content of linear unsaturated fatty acids of 0 to 60% by mass in the constituent fatty acids of the oil and/or fat.
[6] The oil and/or fat composition according to any one of [1] to [5], wherein the oil and/or fat is a hydrogenated oil of lauric oils and/or fats.
[7] The oil and/or fat composition according to any one of [1] to [6], containing 50% by mass or more of triglycerides in the oil and/or fat composition.
[8] A food comprising the oil and/or fat composition according to any one of [1] to [7].
[9] A method for producing the oil and/or fat composition according to any one of [1] to [7], comprising
   an oxidative heating step of oxidatively heat-treating an oil and/or fat, in which the content of linear saturated fatty acids having 6 to 14 carbon atoms in the constituent fatty acids of the oil and/or fat is 4 to 100% by mass, to generate 5 mass ppm or more of lactone having 6 to 14 carbon atoms and more than 130 mass ppm of linear alkanes having 7 to 9 carbon atoms in the oil and/or fat; and
   subsequently performing a distillation step, or a mixing step, or a distillation step and a subsequent mixing step, or a mixing step and a subsequent distillation step as follows:
      Distillation step: a step of distilling under conditions where the linear alkanes having 7 to 9 carbon atoms in the oil and/or fat are reduced, but the lactone having 6 to 14 carbon atoms in the oil and/or fat remains at 5 mass ppm or more.
      Mixing step: a step of mixing the oil and/or fat after the oxidative heating step or the oil and/or fat after the distillation step with an oil and/or fat having a smaller amount of linear alkanes having 7 to 9 carbon atoms.
[10] The method for producing the oil and/or fat composition according to [9], wherein the oxidative heating step is a step of generating more than 130 mass ppm of linear alkanes having 9 carbon atoms, and the distillation step is a step of reducing the linear alkanes having 9 carbon atoms in the oil and/or fat.
[11] The method for producing the oil and/or fat composition according to [9] or [10], wherein the oil and/or fat to be oxidatively heat-treated is an oil and/or fat having a content of linear unsaturated fatty acids of 0 to 60% by mass in the constituent fatty acids of the oil and/or fat.
[12] The method for producing the oil and/or fat composition according to any one of [9] to [11], wherein the distillation in the distillation step is performed at 200°C or lower, 200 Pa or higher, and within 60 minutes.
[13] The method for producing the oil and/or fat composition according to any one of [9] to [12], wherein the mixing in the mixing step includes mixing an oil and/or fat that has not undergone an oxidative heating step with the oil and/or fat after the oxidative heating step or the distillation step.

According to the present invention, it is possible to provide an oil and/or fat composition having a suppressed rancid odor (oxidative deterioration odor) and improved aroma, particularly, a sweet aroma exhibited by lactone having 6 to 10 carbon atoms and/or a sweet aroma and/or milky aroma exhibited by lactone having 12 to 14 carbon atoms.

### Description of Embodiments

Hereinafter, the present invention will be described in detail with examples. Note that in the embodiments of the present invention, A (numerical value) to B (numerical value) means A or more and B or less. Further, the preferred embodiments, more preferred embodiments, and other embodiments exemplified below can be used in appropriate combinations regardless of expressions such as "preferred" and "more preferred." In addition, the description of numerical ranges is illustrative, and ranges obtained by appropriately combining the upper and lower limits of each range and the numerical values of the examples can also be preferably used. Moreover, terms such as "containing" or "including" may be replaced with "consisting essentially of" or "consisting of."

### [Oil and/or Fat Composition]

The oil and/or fat composition of the present invention is an oil and/or fat composition comprising 5 mass ppm or more of lactone having 6 to 14 carbon atoms and oil and/or fat, wherein an oil and/or fat is such that a content of linear saturated fatty acids having 6 to 14 carbon atoms in constituent fatty acids of the oil and/or fat is 4 to 100% by mass, the lactone having 6 to 14 carbon atoms is γ-lactone and/or δ-lactone, and linear alkanes having 9 carbon atoms in the oil and/or fat composition are 130 mass ppm or less.

### (Lactones)

The oil and/or fat composition of the present invention contains 5 mass ppm or more of lactone having 6 to 14 carbon atoms, and the lactone having 6 to 14 carbon atoms is γ-lactone and/or δ-lactone. These lactones are generated from fatty acids having the corresponding number of carbon atoms. Lactones having 6 to 10 carbon atoms, which are generated from linear saturated fatty acids having 6 to 10 carbon atoms, have a "sweet aroma," and lactones having 12 to 14 carbon atoms, which are generated from linear saturated fatty acids having 12 to 14 carbon atoms, are said to have a "milky aroma" (here, reference is made to the contents described in unpublished patent applications: Japanese Patent Application No. 2021-76196 and international application: PCT/JP2022/017821, the contents of which are incorporated herein as a part thereof). The content of lactone having 6 to 14 carbon atoms in the oil and/or fat composition is preferably 15 mass ppm or more, 60 mass ppm or more, 100 mass ppm or more, 500 mass ppm or more, 1000 mass ppm or more, 2000 mass ppm or more, 3000 mass ppm, or 5000 mass ppm or more, relative to the total mass of the oil and/or fat composition. The content of lactone having 6 to 14 carbon atoms in the oil and/or fat composition may be, for example, 7000 mass ppm or less, 5000 mass ppm or less, 4000 mass ppm or less, or 2000 mass ppm or less. When the content of lactone having 6 to 14 carbon atoms is 5 mass ppm or more, the oil and/or fat composition exhibits a sweet aroma and/or a milky aroma.

In the present invention, the lactone content can be measured by gas chromatography-mass spectrometry.

### (Oil and/or Fat)

The oil and/or fat used in the oil and/or fat composition of the present invention can be an oil and/or fat in which the content of linear saturated fatty acids having 6 to 14 carbon atoms (percentage to the total mass of constituent fatty acids in the oil and/or fat) in the constituent fatty acids of the oil and/or fat is 4 to 100% by mass. Lactones having 6 to 14 carbon atoms are components generated by oxidizing a part of the linear saturated fatty acids having the corresponding number of carbon atoms; therefore, the oil and/or fat composition of the present invention inevitably contains linear saturated fatty acids having 6 to 14 carbon atoms. The linear saturated fatty acids having 6 to 14 carbon atoms may be one type or two or more types. Examples of the linear saturated fatty acids having 6 to 14 carbon atoms include caproic acid, caprylic acid, capric acid, lauric acid, and myristic acid; preferably, caprylic acid and/or capric acid, or lauric acid and/or myristic acid. More preferable is one or more selected from caprylic acid, capric acid, and lauric acid.

The content of linear saturated fatty acids having 6 to 14 carbon atoms in the constituent fatty acids of the oil and/or fat is preferably 4% by mass or more because a sufficient amount of lactone having 6 to 14 carbon atoms can be generated. Further, if the content of the linear saturated fatty acids having 6 to 14 carbon atoms is 100% by mass or less, or 80% by mass or less, the choices of oils and/or fats that can be used in the present invention increase, which is preferable. The content of linear saturated fatty acids having 6 to 14 carbon atoms in the constituent fatty acids of the oil and/or fat is preferably 10 to 100% by mass, more preferably 30 to 95% by mass, further preferably 50 to 95% by mass, and most preferably 70 to 90% by mass.

In particular, lactones having 6 to 10 carbon atoms generated from linear saturated fatty acids having 6 to 10 carbon atoms have a "sweet aroma," and lactones having 12 to 14 carbon atoms generated from linear saturated fatty acids having 12 to 14 carbon atoms have a "milky aroma." Therefore, in order to enhance the "milky aroma," in the linear saturated fatty acids having 6 to 14 carbon atoms, it is preferable that 1/2 or more (mass percentage) are linear saturated fatty acids having 12 to 14 carbon atoms, more preferably 2/3 or more (mass percentage) are linear saturated fatty acids having 12 to 14 carbon atoms, and further preferably 4/5 or more (mass percentage) are linear saturated fatty acids having 12 to 14 carbon atoms. In order to enhance the "sweet aroma," in the linear saturated fatty acids having 6 to 14 carbon atoms, it is preferable that 1/2 or more (mass percentage) are linear saturated fatty acids having 6 to 10 carbon atoms, more preferably 2/3 or more (mass percentage) are linear saturated fatty acids having 6 to 10 carbon atoms, and further preferably 4/5 or more (mass percentage) are linear saturated fatty acids having 6 to 10 carbon atoms.

Note that in the present invention, the constituent fatty acids in the oil and/or fat are fatty acids constituting glycerides (fatty acids bonded to glycerin) or free fatty acids. Since the amount of lactones generated is very small compared to the amount of constituent fatty acids in the oil and/or fat, the amount of oil and/or fat and the percentage (mass ratio) of constituent fatty acids are hardly affected by the generation from fatty acids to lactones. Therefore, in the method for producing an oil and/or fat composition described later, the amount of oil and/or fat and the mass ratio of constituent fatty acids are substantially the same before and after the oxidative heat treatment.

The oil and/or fat used in the oil and/or fat composition of the present invention preferably has a content of linear unsaturated fatty acids in the constituent fatty acids of the oil and/or fat of 0 to 60% by mass. In the method for producing an oil and/or fat composition described later, in the oxidative heating step, linear unsaturated fatty acids generate more rancid odor than linear saturated fatty acids; therefore, it is preferable that the oil and/or fat used in the oxidative heating step has less linear unsaturated fatty acids. The oil and/or fat more preferably has a content of linear unsaturated fatty acids in the constituent fatty acids of the oil and/or fat of 0 to 50% by mass, further preferably 0 to 30% by mass or 0 to 20% by mass, particularly preferably 0 to 10% by mass, and most preferably 0 to 5% by mass. On the other hand, the oil and/or fat mixed with the oxidatively heated oil and/or fat in the mixing step may have a high content of linear unsaturated fatty acids in the constituent fatty acids. The linear unsaturated fatty acids are preferably fatty acids having 16 to 24 carbon atoms, and examples thereof include palmitoleic acid, oleic acid, linoleic acid, linolenic acid, and erucic acid.

The oil and/or fat composition of the present invention can further contain linear saturated fatty acids having 16 to 24 carbon atoms as constituent fatty acids in the oil and/or fat. Examples of these fatty acids include palmitic acid, stearic acid, and behenic acid. These fatty acids are preferably present in an amount of 0 to 50% by mass, more preferably 1 to 30% by mass, and further preferably 10 to 30% by mass, relative to the total amount of constituent fatty acids in the oil and/or fat.

The oil and/or fat may contain one or more of monoglycerides, diglycerides, triglycerides, and fatty acids. The oil and/or fat composition of the present invention preferably contains 50% by mass or more, 60% by mass or more, 70% by mass or more, or 80% by mass or more of triglycerides in the oil and/or fat composition, and further preferably 90% by mass or more or 95% by mass or more. It is also preferable that 80% by mass or more of the glycerides are triglycerides, more preferable that 90% by mass or more of the glycerides are triglycerides, further preferable that 95 to 100% by mass of the glycerides are triglycerides, and most preferable that 98 to 100% by mass of the glycerides are triglycerides. These oils and/or fats can be obtained by esterification reaction of fatty acids and glycerin, interesterificationreaction of fatty acid esters and glycerin, interesterificationreaction of fatty acids and oils and/or fats or the like, or interesterificationreaction of methyl or ethyl esters of fatty acids with glycerin or oils and/or fats. Coconut oil and palm kernel oil can also be used. When unsaturated fatty acids are contained, the unsaturated bonds may be reduced by hydrogenating fatty acids, methyl or ethyl esters of fatty acids, or glycerides. As the oil and/or fat, optionally hydrogenated hardened oil of lauric oils and/or fats is preferable, and it is particularly preferable to use optionally hydrogenated coconut oil or palm kernel oil. As the oil and/or fat, fully hydrogenated oil of lauric oils and/or fats such as coconut oil and palm kernel oil is most preferable. Note that within the range where 4% by mass or more of the constituent fatty acids of the raw material oil and/or fat are linear saturated fatty acids having 6 to 14 carbon atoms, one may mix other oils and/or fats, such as coconut oil, palm kernel oil, palm oil, palm fractionated oil (palm olein, palm super olein, palm mid-fraction, palm stearin, etc.), shea butter, shea fractionated oil, Sal fat, Sal fractionated oil, illipe butter, soybean oil, rapeseed oil, cottonseed oil, safflower oil, sunflower oil, rice oil, corn oil, sesame oil, olive oil, perilla oil, linseed oil, peanut oil, milk fat, cocoa butter, and other animal and vegetable oils and/or fats, mixed oils thereof, processed oils and/or fats, etc.

As the oil and/or fat, it is preferable that all or part of the oil and/or fat in the oil and/or fat composition be oil and/or fat that has undergone the oxidative heating step described later.

### (Linear Alkanes)

In the oil and/or fat composition of the present invention, linear alkanes are components generated separately from lactones when lactones are generated. It is unclear whether these alkanes are components of the rancid odor (oxidative deterioration odor), and it is considered that other oxidation products are also components of the rancid odor. However, since the amount of linear alkanes having 9 carbon atoms in the oil and/or fat composition subjected to the oxidative heating step or the oil and/or fat composition obtained by distilling the same correlates with the degree of rancid odor, it is considered that the amount of linear alkanes having 9 carbon atoms in the oil and/or fat composition correlates with the amount of rancid odor components. At least, under distillation conditions where alkanes having 9 carbon atoms are removed, rancid odor is also reduced, so that it can be said that the boiling point of the rancid odor components is equal to or lower than the boiling point of the alkanes having 9 carbon atoms. Therefore, the content of linear alkanes having 9 carbon atoms in the oil and/or fat composition is preferably 130 mass ppm or less, or 95 mass ppm or less, or 90 mass ppm or less, or 30 mass ppm or less, or 10 mass ppm or less, or 0 mass ppm. Further, by distillation, linear alkanes having 9 or less carbon atoms are removed in the same manner as linear alkanes having 9 carbon atoms because their boiling points are equal to or lower than the boiling point of linear alkanes having 9 carbon atoms. The content of linear alkanes having 7 to 9 carbon atoms in the oil and/or fat composition is preferably 130 mass ppm or less, 95 mass ppm or less, 90 mass ppm or less, 30 mass ppm or less, 10 mass ppm or less, or 0 mass ppm. Note that here, "rancid odor (oxidative deterioration odor)" refers to an unpleasant odor (deterioration odor) generated when oil and/or fat is oxidized and deteriorated.

The oil and/or fat composition of the present invention can contain linear alkanes generated from linear saturated fatty acids having 16 to 24 carbon atoms. For example, it can contain, for example, 5 mass ppm or more, preferably 10 mass ppm or more, of linear alkanes having 17 carbon atoms generated from stearic acid. These linear alkanes have higher boiling points than linear alkanes having 9 carbon atoms, and remain under distillation conditions where lactones having 6 to 14 carbon atoms are not removed by distillation.

In the present invention, the linear alkane content can be measured by gas chromatography-mass spectrometry.

The oil and/or fat composition of the present invention having the above configuration has a sweet aroma and/or a milky aroma. Here, "sweet aroma" means the aroma generated when sugar or caramel is heated. "Milky aroma" means the smell of cow's milk.

### (Other Components)

The oil and/or fat composition may contain any other components that can be usually added to food, as long as they do not impair the effects of the present invention, particularly the flavor of sweet aroma and/or milky aroma. Examples of other components include emulsifiers, antioxidants, alcohols, water, pH adjusters, seasonings, coloring agents, flavorings, antifoaming agents, sugars, sugar alcohols, and stabilizers. Examples of emulsifiers include polyglycerin fatty acid esters, polyglycerin condensed ricinoleates, sorbitan fatty acid esters, sorbitol fatty acid esters, sucrose fatty acid esters, propylene glycol fatty acid esters, organic acid monoglycerides, polysorbates, and lecithin. Examples of antioxidants include tocopherols, tocotrienols, carotenes, polyphenols, ascorbic acid, and ascorbic acid derivatives.

### [Food]

The food of the present invention uses the above oil and/or fat composition. The oil and/or fat composition can be eaten as is, but by using it in place of oils and/or fats conventionally used in various foods, the sweetness and milky flavor of the food can be enhanced. For example, in addition to being blended as a raw material for food, it can also be used as frying oil, stir-frying oil, release oil, cooking oil, and the like. It may also be used by topping or coating food. Examples of foods to which the oil and/or fat composition can be added include conventionally known foods and drinks as long as they usually contain oils and/or fats, such as ice cream, milk-based frozen dessert (ice cream-like food), cream, whipped cream, chocolate, milk coffee, tea, plant-based milk beverages (such as soy milk and almond milk), tempura, fried foods, ramen noodles, pies, and cheese.

### [Method for Producing Oil and/or Fat Composition]

The method for producing the oil and/or fat composition of the present invention includes an oxidative heating step of oxidatively heat-treating an oil and/or fat, in which the content of linear saturated fatty acids having 6 to 14 carbon atoms in the constituent fatty acids of the oil and/or fat is 4 to 100% by mass, to generate 5 mass ppm or more of lactone having 6 to 14 carbon atoms and more than 130 mass ppm of linear alkanes having 7 to 9 carbon atoms in the oil and/or fat;
subsequently performing a distillation step, or a mixing step, or a distillation step and a subsequent mixing step, or a mixing step and a subsequent distillation step as follows.
Distillation step: a step of distilling under conditions where the linear alkanes having 7 to 9 carbon atoms in the oil and/or fat are reduced, but the lactone having 6 to 14 carbon atoms in the oil and/or fat remain at 5 mass ppm or more.
Mixing step: a step of mixing the oil and/or fat after the oxidative heating step or the oil and/or fat after the distillation step with an oil and/or fat having a smaller amount of linear alkanes having 7 to 9 carbon atoms.

In the method for producing the oil and/or fat composition, the definitions of lactones, oils and/or fats, linear alkanes, etc., are as described in [Oil and/or Fat Composition] above.

### (Oxidative Heating Step)

The method for producing the oil and/or fat composition of the present invention includes an oxidative heating step. In the oxidative heating step, oil and/or fat is used as a raw material, and is oxidatively heat-treated to generate lactone having 6 to 14 carbon atoms and linear alkanes having 7 to 9 carbon atoms. The raw material oil and/or fat is as described in (Oil and/or Fat) above, and oil and/or fat having a content of linear saturated fatty acids having 6 to 14 carbon atoms of 4 to 100% by mass in the constituent fatty acids is used.

The raw material oil and/or fat preferably has a content of linear unsaturated fatty acids in the constituent fatty acids of the oil and/or fat of 0 to 60% by mass. In the oxidative heating step, linear unsaturated fatty acids generate more rancid odor than linear saturated fatty acids; therefore, it is preferable that the oil and/or fat used in the oxidative heating step has less linear unsaturated fatty acids. The raw material oil and/or fat more preferably has a content of linear unsaturated fatty acids in the constituent fatty acids of the oil and/or fat of 0 to 50% by mass, further preferably 0 to 30% by mass or 0 to 20% by mass, particularly preferably 0 to 10% by mass, and most preferably 0 to 5% by mass.

It is necessary to heat the oil and/or fat in the presence of oxygen for oxidative heat treatment. Even with the amount of oxygen dissolved in the oil and/or fat, some generation of lactones can be expected, but it is preferable to heat the oil and/or fat under atmospheric pressure, or to heat it while supplying oxygen (or air) into the oil and/or fat. When supplying oxygen, the internal pressure of the apparatus is suitably 0.1 to 10 MPa, preferably 0.5 to 5 MPa, and more preferably 0.8 to 3 MPa in gauge pressure.

Oxidative heating is performed by heating the raw material oil and/or fat, and the temperature may be any temperature at which lactone having 6 to 14 carbon atoms are generated, for example, 140°C or higher, preferably 150°C to 250°C, more preferably 160°C to 225°C, and further preferably 170°C to 200°C. The heating time depends on the heating temperature, but may be any time sufficient to oxidize the raw material oil and/or fat and generate lactones. For example, when the heating temperature is 180°C or higher, the raw material oil and/or fat may be heated for 5 minutes or more, preferably 10 to 120 minutes, or 20 to 90 minutes, or 45 to 75 minutes, after the raw material oil and/or fat reaches 180°C to 200°C. When the heating temperature is 160 to 180°C, the raw material oil and/or fat may be heated for 10 minutes or more, preferably 15 to 160 minutes, or 30 to 120 minutes, after the raw material oil and/or fat reaches 160°C. When the heating temperature is 140 to 160°C, the raw material oil and/or fat may be heated for 15 minutes or more, preferably 90 to 180 minutes, or 90 to 160 minutes, after the raw material oil and/or fat reaches 140°C. The heating conditions are not particularly limited as long as the raw material oil and/or fat can be oxidized to generate lactones, and preferably, the raw material oil and/or fat may be heated in the presence of oxygen, for example, under atmospheric pressure.

In the oil and/or fat, the larger the amount of lactone having 6 to 14 carbon atoms generated by the oxidative heating step, the stronger the "sweet aroma" and "milky aroma," which is preferable. The oil and/or fat after the oxidative heating step is preferably oxidatively heated under conditions such that the content of lactone having 6 to 14 carbon atoms in the oil and/or fat is, for example, 5 mass ppm or more, preferably 15 mass ppm or more, 60 mass ppm or more, 100 mass ppm or more, 500 mass ppm or more, 1000 mass ppm or more, 2000 mass ppm or more, 3000 mass ppm or 5000 mass ppm or more. Note that the content of lactone having 6 to 14 carbon atoms in the oil and/or fat after the oxidative heating step may be, for example, 7000 mass ppm or less, 5000 mass ppm or less, 4000 mass ppm or less, or 2000 mass ppm or less.

In the oxidative heating step, when the generation of lactone having 6 to 14 carbon atoms increases, the generation of linear alkanes, which are other oxidative decomposition products, also increases. As described above, linear alkanes having 9 carbon atoms correlate with rancid odor, and the rancid odor components are considered to have boiling points equal to or lower than that of linear alkanes having 9 carbon atoms. Therefore, if there are many linear alkanes having 7 to 9 carbon atoms, which have boiling points equal to or lower than the boiling point of linear alkanes having 9 carbon atoms, the possibility of generating rancid odor increases, so that the amount of the linear alkanes having 7 to 9 carbon atoms or the linear alkanes having 9 carbon atoms will be appropriately reduced in the distillation step or mixing step described later. Therefore, the oil and/or fat after the oxidative heating step suitably has a content of linear alkanes having 7 to 9 carbon atoms in the oil and/or fat of more than 130 ppm, or 150 ppm or more, or 200 ppm or more. In particular, although the presence of linear alkanes having 9 carbon atoms in an amount exceeding, for example, 130 mass ppm, causes rancid odor, it enables an increase in the amount of lactone having 6 to 14 carbon atoms, so that the oil and/or fat after the oxidative heating step more suitably has a content of linear alkanes having 9 carbon atoms in the oil and/or fat of more than 130 ppm, 150 ppm or more, or 200 ppm or more. For this reason, it is preferable to perform the oxidative heating step under conditions that result in such a content of linear alkanes having 7 to 9 carbon atoms or linear alkanes having 9 carbon atoms. Note that the content of linear alkanes having 7 to 9 carbon atoms or linear alkanes having 9 carbon atoms in the oil and/or fat after the oxidative heating step is preferably reduced to 130 mass ppm or less, 100 mass ppm or less, 50 mass ppm or less, or 20 mass ppm or less by the distillation step or the mixing step.

The oil and/or fat that has undergone the oxidative heating step is oxidized, and preferably has a peroxide value of 7.5 or more. The oil and/or fat that has undergone the oxidative heating step more preferably has a peroxide value of 10 to 100, or 15 to 90, or 20 to 80, or 25 to 70, or 30 to 60. A peroxide value of 7.5 or more of the oil and/or fat confirms that the oil and/or fat has undergone oxidation to a certain level or more. The peroxide value can be measured according to Standard Methods for the Analysis of Fats, Oils and Related Materials (edited by the Japan Oil Chemists' Society) 2.5.2.1-2013 "Peroxide Value (Acetic Acid-Isooctane Method)."

The method for producing the oil and/or fat composition of the present invention suitably includes one or two steps selected from the following distillation step and mixing step in order to reduce the content of linear alkanes having 7 to 9 carbon atoms or linear alkanes having 9 carbon atoms in the oil and/or fat composition to 130 mass ppm or less while leaving the lactone having 6 to 14 carbon atoms generated in the oxidative heating step. Note that when performing the distillation step and the mixing step, either step may be performed first.

### (Distillation Step)

The distillation step is suitably performed under conditions where alkanes having 7 to 9 carbon atoms and/or alkanes having 9 carbon atoms in the oil and/or fat are reduced, but lactone having 6 to 14 carbon atoms remains in the oil and/or fat at 5 mass ppm or more.

In the distillation step, methods such as ordinary distillation, vacuum distillation, steam distillation, and vacuum steam distillation can be used as appropriate. Vacuum distillation or vacuum steam distillation is preferable because distillation can be performed at low temperatures. In order to leave lactone having 6 to 14 carbon atoms and remove linear alkanes having 7 to 9 carbon atoms, vacuum steam distillation is preferably performed under milder conditions than general deodorization conditions for oils and/or fats. For example, the distillation in the distillation step is suitably performed under conditions of 200°C or lower, 200 Pa or higher, and within 60 minutes, or under conditions of a distillation temperature of 120 to 210°C, a pressure of 200 to 10000 Pa, and a distillation time of 5 to 120 minutes.

Preferably, distillation can be performed at a distillation temperature of 120 to 170°C, a pressure of 200 to 400 Pa, and a distillation time of 20 to 100 minutes.

Preferably, distillation can be performed at a distillation temperature of 160 to 200°C, a pressure of 1000 to 8000 Pa, and a distillation time of 20 to 100 minutes.

Preferably, distillation can be performed at a distillation temperature of 170 to 210°C, a pressure of 1200 to 9500 Pa, and a distillation time of 20 to 100 minutes.

Preferably, distillation can be performed at a distillation temperature of 160 to 200°C, a pressure of 200 to 1000 Pa, and a distillation time of 5 to 90 minutes.

Preferably, distillation can be performed at a distillation temperature of 170 to 210°C, a pressure of 200 to 1200 Pa, and a distillation time of 5 to 60 minutes.

More preferably, distillation can be performed at a distillation temperature of 140 to 160°C, a pressure of 200 to 2000 Pa, and a distillation time of 40 to 90 minutes.

More preferably, distillation can be performed at a distillation temperature of 150 to 170°C, a pressure of 400 to 3000 Pa, and a distillation time of 40 to 90 minutes.

More preferably, distillation can be performed at a distillation temperature of 160 to 180°C, a pressure of 1000 to 4000 Pa, and a distillation time of 40 to 90 minutes.

More preferably, distillation can be performed at a distillation temperature of 170 to 190°C, a pressure of 1200 to 6000 Pa, and a distillation time of 40 to 90 minutes.

More preferably, distillation can be performed at a distillation temperature of 180 to 200°C, a pressure of 2000 to 8000 Pa, and a distillation time of 40 to 90 minutes.

More preferably, distillation can be performed at a distillation temperature of 190 to 210°C, a pressure of 3000 to 10000 Pa, and a distillation time of 40 to 90 minutes.

Further preferably, distillation can be performed at a distillation temperature of 140 to 160°C, a pressure of 250 to 1500 Pa, and a distillation time of 40 to 80 minutes.

Further preferably, distillation can be performed at a distillation temperature of 150 to 170°C, a pressure of 750 to 2000 Pa, and a distillation time of 40 to 80 minutes.

Further preferably, distillation can be performed at a distillation temperature of 160 to 180°C, a pressure of 1200 to 3000 Pa, and a distillation time of 40 to 80 minutes.

Further preferably, distillation can be performed at a distillation temperature of 170 to 190°C, a pressure of 1200 to 5000 Pa, and a distillation time of 40 to 80 minutes.

Further preferably, distillation can be performed at a distillation temperature of 180 to 200°C, a pressure of 2500 to 7000 Pa, and a distillation time of 40 to 80 minutes.

Further preferably, distillation can be performed at a distillation temperature of 190 to 210°C, a pressure of 4000 to 9500 Pa, and a distillation time of 40 to 80 minutes.

Note that in the case of vacuum steam distillation, in addition to the above distillation temperature, pressure, and distillation time, steam is blown into the oil and/or fat composition, and the amount of steam is preferably 0.1 to 10% by mass, preferably 0.5 to 5% by mass, and more preferably 0.8 to 3% by mass, relative to the oil and/or fat composition.

### (Mixing Step)

The mixing step involves mixing the oil and/or fat after the oxidative heating step or the oil and/or fat after the distillation step with an oil and/or fat having a smaller amount of linear alkanes having 7 to 9 carbon atoms. As a result, the amount of linear alkanes having 7 to 9 carbon atoms in the oil and/or fat composition can be reduced.

The oil and/or fat after the oxidative heating step contains more than 130 mass ppm of linear alkanes having 7 to 9 carbon atoms or linear alkanes having 9 carbon atoms in the oil and/or fat. The oil and/or fat after the oxidative heating step preferably contains more than 130 mass ppm of linear alkanes having 7 to 9 carbon atoms and/or linear alkanes having 9 carbon atoms in the oil and/or fat; however, even if the content is 130 mass ppm or less, the amount of linear alkanes in the resulting oil and/or fat composition becomes further lower, which is preferable.

Note that if the amount of linear alkanes is not 130 mass ppm or less even after the mixing step, the mixing step or the distillation step described above can be performed again.

The oil and/or fat added to the oil and/or fat after the oxidative heating step or the oil and/or fat after the distillation step is more preferably an oil and/or fat that has not undergone an oxidative heating step. The fatty acids constituting the oil and/or fat are not particularly limited. The oil and/or fat that has undergone the oxidative heating step may also be used, but in this case, it is preferable that the linear alkanes having 7 to 9 carbon atoms and/or linear alkanes having 9 carbon atoms are present in the oil and/or fat in an amount of 130 mass ppm or less, 100 mass ppm or less, or 50 mass ppm or less.

### Examples

Next, the present invention will be described in more detail with reference to Production Examples, Evaluation Examples, and the like, but the present invention is not limited thereto. In the following, "%" indicates % by mass unless otherwise specified. In the following, "ppm" indicates mass ppm unless otherwise specified.

### [Oil and/or Fat Compositions 1 to 7]

As described below, refined, fully hydrogenated coconut oil (Oil and/or Fat Composition 1) was subjected to oxidative heating step 1, oxidative heating step 2, distillation step 1, distillation step 2, and distillation step 3, as appropriate, to obtain Oil and/or Fat Compositions 2 to 6 and 17. Oil and/or Fat Compositions 1 to 6 and 17 were analyzed and their odor (flavor) was evaluated, and the results are shown in Tables 1 and 2.

### (Oil and/or Fat Composition 1: Raw Material Oil and/or Fat)

Refined, fully hydrogenated coconut oil (manufactured by Nisshin Oillio Group, Ltd.) was used as Oil and/or Fat Composition 1.

Note that the mass percentages of the constituent fatty acids of the refined, fully hydrogenated coconut oil are as follows.
Caprylic acid (8 carbon atoms) 8.0%
Capric acid (10 carbon atoms) 6.1%
Lauric acid (12 carbon atoms) 45.6%
Myristic acid (14 carbon atoms) 18.7%
Palmitic acid (16 carbon atoms) 9.6%
Stearic acid (18 carbon atoms) 11.8%
Other fatty acids 0.2%

### (Oxidative Heating Step 1)

The oil and/or fat composition was heated (200°C, 60 minutes) in a pressurized reaction apparatus (Portable Reactor TPR-1 type/Taiatsu Techno Corporation) filled with oxygen gas. Note that during heating, the oxygen gas was adjusted so that the internal pressure of the apparatus was 0.9 MPa. Heating was stopped 60 minutes after the temperature of the sample reached 200°C, and the sample was cooled to obtain an oil and/or fat composition that had undergone oxidative heating step 1.

### (Oxidative Heating Step 2)

50 g of the oil and/or fat composition was heated (190°C, 60 minutes) in a beaker (200 mL) to obtain an oil and/or fat composition that had undergone oxidative heating step 2. Note that the heating was performed under atmospheric pressure.

### (Distillation Step 1)

The oil and/or fat composition was subjected to vacuum steam distillation under conditions of a distillation temperature of 170°C, a pressure of 2000 Pa (15 Torr), a steam amount (relative to the oil and/or fat composition) of 1% by mass, and a distillation time of 1 hour to obtain an oil and/or fat composition that had undergone distillation step 1.

### (Distillation Step 2)

The oil and/or fat composition was subjected to vacuum steam distillation under conditions of a distillation temperature of 245°C, a pressure of 400 Pa (3 Torr), a steam amount (relative to the oil and/or fat composition) of 3% by mass, and a distillation time of 1 hour to obtain an oil and/or fat composition that had undergone distillation step 2.

### (Distillation Step 3)

The oil and/or fat composition was subjected to vacuum steam distillation under conditions of a distillation temperature of 140°C, a pressure of 1067 Pa (8 Torr), a steam amount (relative to the oil and/or fat composition) of 1% by mass, and a distillation time of 1 hour to obtain an oil and/or fat composition that had undergone distillation step 3.

### (Oil and/or Fat Composition 2)

Refined, fully hydrogenated coconut oil (Oil and/or Fat Composition 1) was used as a raw material and subjected to oxidative heating step 1 to obtain Oil and/or Fat Composition 2.

### (Oil and/or Fat Composition 3)

Oil and/or Fat Composition 2 was subjected to distillation step 1 to obtain Oil and/or Fat Composition 3.

### (Oil and/or Fat Composition 4)

Refined, fully hydrogenated coconut oil (Oil and/or Fat Composition 1) was used as a raw material and subjected to oxidative heating step 2 to obtain Oil and/or Fat Composition 4.

### (Oil and/or Fat Composition 5)

Oil and/or Fat Composition 2 was used as a raw material and subjected to distillation step 2 to obtain Oil and/or Fat Composition 5.

### (Oil and/or Fat Composition 6)

Refined, fully hydrogenated coconut oil (Oil and/or Fat Composition 1) was used as a raw material and subjected to oxidative heating step 1, distillation step 1, oxidative heating step 1, distillation step 1, oxidative heating step 1, distillation step 1, oxidative heating step 1, and distillation step 1 in this order, that is, oxidative heating step 1 and distillation step 1 were each performed four times, to obtain Oil and/or Fat Composition 6.

### (Oil and/or Fat Composition 17)

Oil and/or Fat Composition 2 was used as a raw material and subjected to distillation step 3 to obtain Oil and/or Fat Composition 17.

### [Analysis]

### (Peroxide Value: POV)

The peroxide value (POV) of each oil and/or fat composition was measured according to Standard Methods for the Analysis of Fats, Oils and Related Materials (edited by the Japan Oil Chemists' Society) 2.5.2.1-2013 "Peroxide Value (Acetic Acid-Isooctane Method)."

### (Anisidine Value: AnV)

The anisidine value (AnV) of each oil and/or fat composition was measured according to Standard Methods for the Analysis of Fats, Oils and Related Materials (edited by the Japan Oil Chemists' Society) 2.5.3-2013 "Anisidine Value."

### (Analysis of C6-14 Lactones (Lactones Having 6 to 14 Carbon Atoms))

The content of lactones having 6 to 14 carbon atoms in each oil and/or fat composition was determined by gas chromatography-mass spectrometry (GC/MS). The total amount (mass) of lactones having 6 to 14 carbon atoms was defined as total lactones. Note that the analysis conditions are as follows.

### GC/MS conditions

- Column: DB-1HT (15 m×φ0.25 mm×0.1 µm)
- Temperature program: 40°C [3 min] - 4°C/min - 170°C - 25°C/min - 370°C [7 min]
- Carrier gas: helium
- Inlet: 370°C, split ratio=20:1
- Ion source: EI
- Detector: MSD
- Solution concentration: 0.1 mg/mL
- Injection volume: 1 µL
- Analysis method: quantification (ppm) using a C6-C16 lactone standard solution as an external standard

### (Linear Alkanes Having 9 and 17 Carbon Atoms: C9 Alkane, C17 Alkane)

The content of linear alkanes having 9 and 17 carbon atoms in each oil and/or fat composition was determined by gas chromatography-mass spectrometry (GC/MS). Note that the analysis conditions are as follows.

### GC/MS conditions

- Column: DB-1HT (15 m×φ0.25 mm×0.1 µm)
- Temperature program: 40°C [3 min] - 4°C/min - 170°C - 25°C/min - 370°C [7 min]
- Carrier gas: helium
- Inlet: 370°C, split ratio=20:1
- Ion source: EI
- Detector: MSD
- Solution concentration: 0.1 mg/mL
- Injection volume: 1 µL
- Analysis method: quantification (ppm) using a C6-C18 alkane standard solution as an external standard

### (Milky Aroma)

Each oil and/or fat composition was heated at 50°C, and 10 expert panelists evaluated the aroma (milky aroma) on a scale of 0 to 4. As a standard for milky aroma, it was explained that the smell of cow's milk or a smell close to it should be recognized as "milky aroma," and since there was a common understanding among the panelists that Oil and/or Fat Compositions 1, 4, and 3 had a strong milky aroma in this order, these samples were used as standards, and the evaluation was performed with the following scores. The average values of the panelists are shown in Tables 1 and 3. Note that a higher value indicates a stronger milky aroma, which is preferable.
0 points: No milky aroma (same level as Oil and/or Fat Composition 1)
1 point: Milky aroma is perceived (intermediate level between Oil and/or Fat Composition 1 and Oil and/or Fat Composition 4)
2 points: Milky aroma is perceived (same level as Oil and/or Fat Composition 4)
3 points: Milky aroma is perceived as slightly strong (intermediate level between Oil and/or Fat Composition 4 and Oil and/or Fat Composition 3)
4 points: Milky aroma is perceived as strong (same level as Oil and/or Fat Composition 3, or stronger than Oil and/or Fat Composition 3)

Here, scores of 1.5 points or more were rated as excellent (⊚), 0.6 points or more and less than 1.5 points as good (O), and 0 to less than 0.6 points as unacceptable (×).

### (Rancid Odor (Oxidative Deterioration Odor))

Each oil and/or fat composition was evaluated based on Oil and/or Fat Composition 1, which has no rancid odor, and Oil and/or Fat Composition 2, which has rancid odor. Each oil and/or fat composition was heated to 50°C, and 10 expert panelists evaluated the aroma (rancid odor) on a scale of 0 to 2. The panelists were selected from those who had a good understanding of general rancid odor of oils and/or fats. The average values of the panelists are shown in Tables 1 and 3. Note that a higher value indicates stronger rancid odor, which is undesirable.
0 points: No rancid odor (same level as Oil and/or Fat Composition 1)
1 point: Rancid odor is perceived, but within an acceptable range.
2 points: Rancid odor is perceived and unsuitable for taste (same level as Oil and/or Fat Composition 2, or worse than Oil and/or Fat Composition 2).

Here, 0 to 1.0 points or less were rated as good (O), more than 1.0 to 1.5 points or less as acceptable (△), and more than 1.5 points as unacceptable (×).

**Table 1**

| | Oxidative Heating Step | Distillation Step | POV | AnV | Total Lactones (ppm) | C9 Alkane (ppm) | C17 Alkane (ppm) | Milky Aroma | Rancid Odor |
|---|---|---|---|---|---|---|---|---|---|
| Oil and/or Fat Composition 1 | - | - | 0.1 | 0.0 | 0.0 | 0.0 | 0.0 | 0.0 (×) | 0.0 (○) |
| Oil and/or Fat Composition 2 | Oxidative Heating Step 1 | - | 24.1 | 9.2 | 4269.1 | 230.7 | 210.5 | 2.4 (⊚) | 2.0 (×) |
| Oil and/or Fat Composition 3 | Oxidative Heating Step 1 | Distillation Step 1 | 0.4 | 7.5 | 2184.7 | 7.1 | 90.7 | 4.0 (⊚) | 0.0 (○) |
| Oil and/or Fat Composition 4 | Oxidative Heating Step 2 | - | 18.3 | 3.8 | 245.0 | 24.8 | 38.6 | 2.0 (⊚) | 0.3 (○) |
| Oil and/or Fat Composition 5 | Oxidative Heating Step 1 | Distillation Step 2 | 0.0 | 6.1 | 0.0 | 0.0 | 0.0 | 0.0 (×) | 0.0 (○) |
| Oil and/or Fat Composition 6 | Oxidative Heating Step 1, 4 Times | Distillation Step 1, 4 Times | 0.4 | 24.2 | 6103.6 | 0.0 | 122.5 | 4.0 (⊚) | 0.0 (○) |
| Oil and/or Fat Composition 17 | Oxidative Heating Step 1 | Distillation Step 3 | 8.4 | 8.5 | 1854.6 | 8.9 | 36.2 | 4.0 (⊚) | 0.0 (○) |

| | | | | | | | | | |
|---|---|---|---|---|---|---|---|---|---|
| * C9 alkane: linear alkane having 9 carbon atoms, C17 alkane: linear alkane having 17 carbon atoms | | | | | | | | | |

**Table 2**

| | γ-Lactone Content (ppm) | | | | | δ-Lactone Content (ppm) | | | | | Total Lactone Content (ppm) |
|---|---|---|---|---|---|---|---|---|---|---|---|
| | C8 | C10 | C11 | C12 | C14 | C8 | C10 | C11 | C12 | C14 | |
| Oil and/or Fat Composition 1 | 0.0 | 0.0 | 0.0 | 0.0 | 0.0 | 0.0 | 0.0 | 0.0 | 0.0 | 0.0 | 0.0 |
| Oil and/or Fat Composition 2 | 250.2 | 158.3 | 101.6 | 1197.4 | 326.8 | 220.8 | 187.0 | 18.2 | 1199.2 | 609.6 | 4269.1 |
| Oil and/or Fat Composition 3 | 123.8 | 85.8 | 43.2 | 636.6 | 176.4 | 109.7 | 96.5 | 0.0 | 613.5 | 299.2 | 2184.7 |
| Oil and/or Fat Composition 4 | 7.5 | 14.5 | 0.0 | 41.2 | 41.2 | 7.3 | 6.8 | 0.0 | 89.0 | 37.5 | 245.0 |
| Oil and/or Fat Composition 5 | 0.0 | 0.0 | 0.0 | 0.0 | 0.0 | 0.0 | 0.0 | 0.0 | 0.0 | 0.0 | 0.0 |
| Oil and/or Fat Composition 6 | 284.3 | 232.9 | 181.7 | 1853.5 | 472.4 | 272.7 | 248.4 | 24.6 | 1715.8 | 817.3 | 6103.6 |
| Oil and/or Fat Composition 17 | 98.0 | 81.9 | 41.8 | 607.5 | 164.0 | 86.2 | 80.4 | 0.0 | 499.1 | 195.7 | 1854.6 |

| | | | | | | | | | | | |
|---|---|---|---|---|---|---|---|---|---|---|---|
| * C8: lactone having 8 carbon atoms, C10: lactone having 10 carbon atoms, C11: lactone having 11 carbon atoms, C12: lactone having 12 carbon atoms, C14: lactone having 14 carbon atoms | | | | | | | | | | | |

In untreated Oil and/or Fat Composition 1 and Oil and/or Fat Composition 5, which had undergone distillation step 2, neither lactones nor alkanes were confirmed, and there was no milky aroma. Oil and/or Fat Composition 2, which has a high content of linear alkanes having 9 carbon atoms, had a rancid odor, while Oil and/or Fat Composition 1 and Oil and/or Fat Compositions 2 to 6, which have a low content of the same alkanes, had no or little rancid odor. Oil and/or Fat Composition 3, which was obtained by distilling Oil and/or Fat Composition 2, had a stronger milky aroma despite having a smaller amount of lactones than Oil and/or Fat Composition 2. It is predicted that rancid odor (or alkanes) interferes with the development of milky aroma. Note that the only lactones present had the number of carbon atoms corresponding to the number of carbon atoms of the constituent fatty acids of the raw material oil and/or fat.

In the untreated refined, fully hydrogenated coconut oil and each distillation sample, it was confirmed that the content of alkanes having 9 carbon atoms was 100 ppm or less. It was confirmed that the oxidative heat treatment sample contained 100 ppm or more of alkanes having 9 carbon atoms.

Alkanes having 17 carbon atoms were not confirmed in the untreated refined, fully hydrogenated coconut oil and the strongly distilled sample. It was confirmed that 5 ppm or more of alkanes having 17 carbon atoms were present in the oxidative heat-treated samples and the mildly distilled samples.

### [Oil and/or Fat Compositions 7 to 16 (Mixing Step)]

Two types of oil and/or fat compositions listed in the blended oil and/or fat composition of Table 3 were mixed at a mass ratio of 1:1 (dissolved and mixed at 60°C, under atmospheric pressure) to obtain Oil and/or Fat Compositions 7 to 16. Similar to Oil and/or Fat Compositions 1 to 6, Oil and/or Fat Compositions 7 to 16 were analyzed and evaluated for flavor, and the results are shown in Tables 3 and 4.

**Table 3**

| | Blended Oil and/or Fat Composition | POV | AnV | Total Lactones (ppm) | C9 Alkane (ppm) | C17 Alkane (ppm) | Milky Aroma | Rancid Odor |
|---|---|---|---|---|---|---|---|---|
| Oil and/or Fat Composition 7 | Oil and/or Fat Composition 1, Oil and/or Fat Composition 2 | 12.1 | 4.6 | 2134.6 | 115.4 | 105.3 | 1.6 (⊚) | 1.4 (Δ) |
| Oil and/or Fat Composition 8 | Oil and/or Fat Composition 1, Oil and/or Fat Composition 7 | 6.1 | 2.3 | 1067.5 | 57.7 | 52.6 | 0.9 (○) | 0.9 (○) |
| Oil and/or Fat Composition 9 | Oil and/or Fat Composition 2, Oil and/or Fat Composition 7 | 18.1 | 6.9 | 3202.0 | 173.0 | 157.9 | 1.9 (⊚) | 1.8 (×) |
| Oil and/or Fat Composition 10 | Oil and/or Fat Composition 2, Oil and/or Fat Composition 4 | 21.2 | 6.5 | 2257.2 | 127.8 | 124.6 | 2.6 (⊚) | 1.1 (Δ) |
| Oil and/or Fat Composition 11 | Oil and/or Fat Composition 1, Oil and/or Fat Composition 3 | 0.3 | 3.8 | 1092.5 | 3.6 | 45.4 | 3.1 (⊚) | 0.0 (○) |
| Oil and/or Fat Composition 12 | Oil and/or Fat Composition 3, Oil and/or Fat Composition 7 | 6.3 | 6.1 | 2159.9 | 61.2 | 98.0 | 3.1 (⊚) | 0.9 (○) |
| Oil and/or Fat Composition 13 | Oil and/or Fat Composition 1, Oil and/or Fat Composition 4 | 9.2 | 1.9 | 122.7 | 12.4 | 19.3 | 0.7 (○) | 0.1 (○) |
| Oil and/or Fat Composition 14 | Oil and/or Fat Composition 2, Oil and/or Fat Composition 3 | 12.3 | 8.4 | 3227.1 | 118.9 | 150.6 | 1.8 (⊚) | 1.4 (Δ) |
| Oil and/or Fat Composition 15 | Oil and/or Fat Composition 3, Oil and/or Fat Composition 4 | 9.4 | 5.7 | 1215.1 | 16.0 | 64.7 | 4.0 (⊚) | 0.2 (○) |
| Oil and/or Fat Composition 16 | Oil and/or Fat Composition 1, Oil and/or Fat Composition 6 | 0.3 | 12.1 | 3052.1 | 0.0 | 61.3 | 2.0 (⊚) | 0.0 (○) |

| | | | | | | | | |
|---|---|---|---|---|---|---|---|---|
| * C9 alkane: linear alkane having 9 carbon atoms, C17 alkane: linear alkane having 17 carbon atoms | | | | | | | | |

**Table 4**

| | γ-Lactone Content (ppm) | | | | | δ-Lactone Content (ppm) | | | | | Total Lactone Content (ppm) |
|---|---|---|---|---|---|---|---|---|---|---|---|
| | C8 | C10 | C11 | C12 | C14 | C8 | C10 | C11 | C12 | C14 | |
| Oil and/or Fat Composition 7 | 125.1 | 79.2 | 50.8 | 598.7 | 163.4 | 110.4 | 93.5 | 9.1 | 599.6 | 304.8 | 2134.6 |
| Oil and/or Fat Composition 8 | 62.6 | 39.6 | 25.4 | 299.4 | 81.7 | 55.2 | 46.8 | 4.6 | 299.8 | 152.4 | 1067.5 |
| Oil and/or Fat Composition 9 | 187.7 | 118.7 | 76.2 | 898.1 | 245.1 | 165.6 | 140.3 | 13.7 | 899.4 | 457.2 | 3202.0 |
| Oil and/or Fat Composition 10 | 128.9 | 86.4 | 50.8 | 619.3 | 184.0 | 114.1 | 96.9 | 9.1 | 644.1 | 323.6 | 2257.2 |
| Oil and/or Fat Composition 11 | 61.9 | 42.9 | 21.6 | 318.3 | 88.2 | 54.9 | 48.3 | 0.0 | 306.8 | 149.6 | 1092.5 |
| Oil and/or Fat Composition 12 | 124.5 | 82.5 | 47.0 | 617.7 | 169.9 | 110.1 | 95.0 | 4.6 | 606.6 | 302.0 | 2159.9 |
| Oil and/or Fat Composition 13 | 3.8 | 7.3 | 0.0 | 20.6 | 20.6 | 3.7 | 3.4 | 0.0 | 44.5 | 18.8 | 122.7 |
| Oil and/or Fat Composition 14 | 187.0 | 122.1 | 72.4 | 917.0 | 251.6 | 165.3 | 141.8 | 9.1 | 906.4 | 454.4 | 3227.1 |
| Oil and/or Fat Composition 15 | 65.7 | 50.2 | 21.6 | 338.9 | 108.8 | 58.5 | 51.7 | 0.0 | 351.3 | 168.4 | 1215.1 |
| Oil and/or Fat Composition 16 | 142.2 | 116.5 | 90.9 | 926.8 | 236.2 | 136.4 | 124.2 | 12.3 | 857.9 | 408.7 | 3052.1 |

| | | | | | | | | | | | |
|---|---|---|---|---|---|---|---|---|---|---|---|
| * C8: lactone having 8 carbon atoms, C10: lactone having 10 carbon atoms, C11: lactone having 11 carbon atoms, C12: lactone having 12 carbon atoms, C14: lactone having 14 carbon atoms | | | | | | | | | | | |

As shown in Table 3, the oil and/or fat compositions containing 5 mass ppm or more of lactones having 6 to 14 carbon atoms (total lactones) in the oil and/or fat composition had a milky aroma, while it was confirmed that the rancid odor was suppressed when the linear alkanes having 9 carbon atoms in the oil and/or fat compositions were 130 mass ppm or less.

### [Oil and/or Fat Compositions 18 to 22]

As described below, Oil and/or Fat Composition 18, to which C12 δ-lactone (δ-dodecanolactone), C9 alkane, and C17 alkane were added, was subjected to distillation steps 3 to 6, as appropriate, to obtain Oil and/or Fat Compositions 19 to 22 (Table 5). Analysis and odor evaluation were performed in the same manner as for Oil and/or Fat Compositions 1 to 7 and 18, and the results are shown in Table 6.

### (Oil and/or Fat Composition 18: Raw Material Oil and/or Fat)

To Oil and/or Fat Composition 1 (refined, fully hydrogenated coconut oil: manufactured by Nisshin Oillio Group, Ltd.), 1700 mass ppm of δ-dodecanolactone (manufactured by Tokyo Chemical Industry Co., Ltd.), 140 mass ppm of C9 alkane (Nonane: manufactured by Tokyo Chemical Industry Co., Ltd.), and 150 mass ppm of C17 alkane (Heptadecane: manufactured by Tokyo Chemical Industry Co., Ltd.) were added and mixed to prepare Oil and/or Fat Composition 18.

### (Distillation Step 3)

The oil and/or fat composition was subjected to vacuum steam distillation under conditions of a distillation temperature of 140°C, a pressure of 1067 Pa (8 Torr), a steam amount (relative to the oil and/or fat composition) of 1% by mass, and a distillation time of 1 hour to obtain an oil and/or fat composition that had undergone distillation step 3.

### (Distillation Step 4)

The oil and/or fat composition was subjected to vacuum steam distillation under conditions of a distillation temperature of 140°C, a pressure of 533 Pa (4 Torr), a steam amount (relative to the oil and/or fat composition) of 1% by mass, and a distillation time of 1 hour to obtain an oil and/or fat composition that had undergone distillation step 3.

### (Distillation Step 5)

The oil and/or fat composition was subjected to vacuum steam distillation under conditions of a distillation temperature of 140°C, a pressure of 1067 Pa (8 Torr), a steam amount (relative to the oil and/or fat composition) of 1% by mass, and a distillation time of 0.5 hours to obtain an oil and/or fat composition that had undergone distillation step 3.

### (Distillation Step 6)

The oil and/or fat composition was subjected to vacuum steam distillation under conditions of a distillation temperature of 140°C, a pressure of 1067 Pa (8 Torr), a steam amount (relative to the oil and/or fat composition) of 1% by mass, and a distillation time of 3 hours to obtain an oil and/or fat composition that had undergone distillation step 3.

### (Oil and/or Fat Composition 19)

Oil and/or Fat Composition 18 was subjected to distillation step 4 to obtain Oil and/or Fat Composition 19.

### (Oil and/or Fat Composition 20)

Oil and/or Fat Composition 2 was subjected to distillation step 5 to obtain Oil and/or Fat Composition 20.

### (Oil and/or Fat Composition 21)

Oil and/or Fat Composition 2 was subjected to distillation step 3 to obtain Oil and/or Fat Composition 21.

### (Oil and/or Fat Composition 22)

Oil and/or Fat Composition 2 was subjected to distillation step 6 to obtain Oil and/or Fat Composition 22.

**Table 5**

| | Distillation Step | POV | AnV | C12 Lactone (ppm) | C9 Alkane (ppm) | C17 Alkane (ppm) | Milky Aroma | Rancid Odor |
|---|---|---|---|---|---|---|---|---|
| Oil and/or Fat Composition 19 | Distillation Step 4 | 0.1 | 0.0 | 1292.4 | 0.0 | 102.0 | 4.0 (⊚) | 0.0 (○) |
| Oil and/or Fat Composition 20 | Distillation Step 5 | 0.1 | 0.0 | 1311.3 | 0.8 | 98.2 | 4.0 (⊚) | 0.0 (○) |
| Oil and/or Fat Composition 21 | Distillation Step 3 | 0.1 | 0.0 | 1243.2 | 0.0 | 90.3 | 4.0 (⊚) | 0.0 (○) |
| Oil and/or Fat Composition 22 | Distillation Step 6 | 0.1 | 0.0 | 1243.6 | 0.0 | 84.8 | 4.0 (⊚) | 0.0 (○) |

| | | | | | | | | |
|---|---|---|---|---|---|---|---|---|
| * C9 alkane: linear alkane having 9 carbon atoms, C17 alkane: linear alkane having 17 carbon atoms | | | | | | | | |

Oil and/or Fat Compositions 19 to 22 had a strong milky aroma and no rancid odor was perceived.

### [Cow's Milk]

Oil and/or Fat Compositions 1 to 5 were added to medium-chain fatty acid triglycerides (MCT: manufactured by Nisshin Oillio Group, Ltd.) at 8% by mass relative to 100% by mass of medium-chain fatty acid triglycerides (diluted oil). This diluted oil was added at 1% by mass relative to 100% by mass of cow's milk (nonfat milk solids: 8.8% by mass) to obtain evaluation samples (milk with added oil). The milky aroma of the sample containing Oil and/or Fat Composition 1 was set to 0 points, the milky aroma of commercially available cow's milk (nonfat milk solids: 8.8% by mass) was set to 2 points, and the milky aroma of the evaluation samples containing each of Oil and/or Fat Compositions 2 to 5 was relatively evaluated by 10 expert panelists based on the following criteria. The evaluation of "milky aroma" was the same as the evaluation method for "milky aroma" described above. The results (average score of each panelist's evaluation) are shown in Table 6.

### <Evaluation Points for Milky Aroma>

0 points: Same level as sample containing Oil and/or Fat Composition 1
1 point: Weaker than milky aroma of commercially available cow's milk
2 points: Same level as milky aroma of commercially available cow's milk
3 points: Stronger than milky aroma of commercially available cow's milk

**Table 6**

| | Milky Aroma |
|---|---|
| Sample Containing Oil and/or Fat Composition 1 | 0.0 |
| Sample Containing Oil and/or Fat Composition 2 | 0.3 |
| Sample Containing Oil and/or Fat Composition 3 | 3.0 |
| Sample Containing Oil and/or Fat Composition 4 | 2.4 |
| Sample Containing Oil and/or Fat Composition 5 | 0.0 |

Similar to the results in Table 6, it was confirmed that Oil and/or Fat Compositions 3 and 4 had a strong milky aroma, and that the milky aroma was perceived as stronger than that of Oil and/or Fat Composition 2, which has a high lactone content.

### [Ice Cream-like Food]

Ice cream-like food (ice milk) was produced with the formulation (parts by mass) shown in Table 7. Water and liquid sugar were mixed, and while heating, oils and/or fats, 0.21 parts by mass of distilled fatty acid monoglycerides as an emulsifier, and stabilizers (0.14 parts by mass of locust bean gum and 0.07 parts by mass of guar gum), vanilla flavor, and skim milk powder were added and mixed. After raising the temperature to 80°C and holding it for 5 minutes, pre-emulsification was carried out with a homo mixer, and fine homogenization was carried out under a pressure of 15 MPa using a homogenizer. The obtained emulsion was cooled by immersion in ice water, left at 5°C overnight or longer, and an ice cream mix was produced. The ice cream mix was cooled and stirred in an ice cream freezer, cooled to -6°C or lower, filled into cups, and cooled in a freezer at -50°C for 24 hours or longer.

**Table 7**

| | | Milk-Based Frozen Dessert 1 | Milk-Based Frozen Dessert 2 |
|---|---|---|---|
| Oil and/or Fat | Vegetable Oil and/or Fat | 8.00 | 7.92 |
| | Oil and/or Fat Composition 6 | 0.00 | 0.08 |
| Emulsifier and Stabilizer | | 0.42 | |
| Water | | 64.48 | |
| Liquid Sugar | | 5.00 | |
| Vanilla Flavor | | 0.10 | |
| Skim Milk Powder | | 7.00 | |
| Sugar | | 15.00 | |

The units of values are parts by mass
Vegetable Oil and/or Fat (Nisshin Oillio Group, Ltd., blended oil with PMF:coconut oil=85:15)

Five flavor panelists evaluated each sample based on the "milky aroma" evaluation described above, and all answered that Ice milk 2, to which Oil and/or Fat Composition 6 was added, had a strong milky aroma.

### [Whipped Cream]

Whipped cream was produced with the formulation (parts by mass) shown in Table 8. Oils and/or fats and oil-soluble emulsifiers (0.130 parts by mass of lecithin, 0.06 parts by mass of saturated fatty acid monoglycerides, and 0.09 parts by mass of sorbitan fatty acid esters) were mixed to prepare an oil phase. Water, a water-soluble emulsifier (0.12 parts by mass of sucrose fatty acid ester), skim milk powder, and a stabilizer (0.10 parts by mass of sodium hexametaphosphate) were mixed at 70°C to prepare an aqueous phase. The oil phase was added to the aqueous phase and the mixture was heated to 80°C while stirring and emulsifying. Next, fine homogenization was carried out under a pressure of 6 MPa using a homogenizer. The obtained emulsion was cooled by immersion in ice water, and then left to stand at 5°C for 12 hours or more. Further, the emulsion was adjusted to 7°C, 10 parts by mass of sugar was added to 100 parts by mass of the emulsion, and the mixture was whipped with a Hobart mixer (manufactured by Hobart Japan) at about 120 rpm for 10 minutes until stiff to produce whipped cream (nonfat milk solids content: 4.5% by mass).

**Table 8**

| | | Whipped Cream 1 | Whipped Cream 2 |
|---|---|---|---|
| Oil and/or Fat | Vegetable Oil and/or Fat | 45.00 | 44.92 |
| | Oil and/or Fat Composition 6 | 0.00 | 0.08 |
| Emulsifier and Stabilizer | | 0.50 | |
| Water | | 50.00 | |
| Skim Milk Powder | | 4.50 | |
| Sugar | | 7.00 | |

The units of values are parts by mass
Vegetable Oil and/or Fat (Nisshin Oillio Group, Ltd., blended oil with palm kernel oil:PMF:palm kernel fully hydrogenated oil=59:20:21)

Five flavor panelists evaluated each sample based on the "milky aroma" evaluation described above, and all answered that Whipped Cream 2, to which Oil and/or Fat Composition 6 was added, had a strong milky aroma.

### [Milk Coffee]

25 parts by mass of oils and/or fats, 0.15 parts by mass of sucrose fatty acid ester with HLB 1, 0.10 parts by mass of sorbitan fatty acid ester, 0.05 parts by mass of monoglyceride succinate, and 0.01% by mass of lecithin were mixed at 70°C to prepare an oil phase. Further, 68.79 parts by mass of water, 0.50 parts by mass of sucrose fatty acid ester, 0.30 parts by mass of disodium hydrogen phosphate (anhydrous), 2.0 parts by mass of skim milk powder, 3.0 parts by mass of sodium caseinate, and 0.10 parts by mass of sucrose fatty acid ester with HLB 5 were mixed at 70°C to prepare an aqueous phase. The oil phase was added to the aqueous phase and heated to 80°C with stirring and emulsifying. Then, fine homogenization was carried out under a pressure of 17 MPa using a homogenizer. Fine homogenization was performed twice. The obtained emulsion was cooled by immersion in ice water, then left at 5°C for 12 hours or more to produce coffee cream (nonfat milk solids content: 2.0% by mass).

The coffee cream was added to coffee at 2% by mass to produce milk coffee. The amounts (parts by mass) of the components derived from the coffee cream in the milk coffee are shown in Table 9.

**Table 9**

| | | Milk Coffee 1 | Milk Coffee 2 |
|---|---|---|---|
| Oil and/or Fat | Vegetable Oil and/or Fat | 0.500 | 0.495 |
| | Oil and/or Fat Composition 6 | 0.000 | 0.005 |
| Emulsifier and Stabilizer | | 0.024 | |
| Water | | 1.376 | |
| Skim Milk Powder | | 0.040 | |
| Sodium Caseinate | | 0.060 | |
| Sugar | | 98.000 | |

The units of values are parts by mass
Vegetable Oil and/or Fat (Nisshin Oillio Group, Ltd., sunflower oil)

Five flavor panelists evaluated each sample based on the evaluation of "milky aroma" described above, and all answered that Milk Coffee 2, to which Oil and/or Fat Composition 6 was added, had a strong milky aroma.

## Claims

1. An oil and/or fat composition comprising 5 mass ppm or more of lactone having 6 to 14 carbon atoms and oil and/or fat, wherein
an oil and/or fat is such that a content of linear saturated fatty acids having 6 to 14 carbon atoms in constituent fatty acids of the oil and/or fat is 4 to 100% by mass,
the lactone having 6 to 14 carbon atoms is γ-lactone and/or δ-lactone, and
linear alkanes having 9 carbon atoms in the oil and/or fat composition are 130 mass ppm or less.

2. The oil and/or fat composition according to claim 1, wherein the linear alkanes having 7 to 9 carbon atoms in the oil and/or fat composition are 130 mass ppm or less.

3. The oil and/or fat composition according to claim 1 or 2, further comprising 5 mass ppm or more of linear alkanes having 17 carbon atoms.

4. The oil and/or fat composition according to any one of claims 1 to 3, having a sweet aroma and/or a milky aroma.

5. The oil and/or fat composition according to any one of claims 1 to 4, wherein the oil and/or fat is an oil and/or fat having a content of linear unsaturated fatty acids of 0 to 60% by mass in the constituent fatty acids of the oil and/or fat.

6. The oil and/or fat composition according to any one of claims 1 to 5, wherein the oil and/or fat is a hydrogenated oil of lauric oils and/or fats.

7. The oil and/or fat composition according to any one of claims 1 to 6, containing 50% by mass or more of triglycerides in the oil and/or fat composition.

8. A food comprising the oil and/or fat composition according to any one of claims 1 to 7.

9. A method for producing the oil and/or fat composition according to any one of claims 1 to 7, comprising
an oxidative heating step of oxidatively heat-treating an oil and/or fat, in which the content of linear saturated fatty acids having 6 to 14 carbon atoms in the constituent fatty acids of the oil and/or fat is 4 to 100% by mass, to generate 5 mass ppm or more of lactone having 6 to 14 carbon atoms and more than 130 mass ppm of linear alkanes having 7 to 9 carbon atoms in the oil and/or fat; and
subsequently performing a distillation step, or a mixing step, or a distillation step and a subsequent mixing step, or a mixing step and a subsequent distillation step as follows:
Distillation step: a step of distilling under conditions where the linear alkanes having 7 to 9 carbon atoms in the oil and/or fat are reduced, but the lactone having 6 to 14 carbon atoms in the oil and/or fat remains at 5 mass ppm or more.
Mixing step: a step of mixing the oil and/or fat after the oxidative heating step or the oil and/or fat after the distillation step with an oil and/or fat having a smaller amount of linear alkanes having 7 to 9 carbon atoms.

10. The method for producing the oil and/or fat composition according to claim 9, wherein the oxidative heating step is a step of generating more than 130 mass ppm of linear alkanes having 9 carbon atoms, and the distillation step is a step of reducing the linear alkanes having 9 carbon atoms in the oil and/or fat.

11. The method for producing the oil and/or fat composition according to claim 9 or 10, wherein the oil and/or fat to be oxidatively heat-treated is an oil and/or fat having a content of linear unsaturated fatty acids of 0 to 60% by mass in the constituent fatty acids of the oil and/or fat.

12. The method for producing the oil and/or fat composition according to any one of claims 9 to 11, wherein the distillation in the distillation step is performed at 200°C or lower, 200 Pa or higher, and within 60 minutes.

13. The method for producing the oil and/or fat composition according to any one of claims 9 to 12, wherein the mixing in the mixing step includes mixing the oil and/or fat after the oxidative heating step or the distillation step with an oil and/or fat that has not undergone an oxidative heating step.
